# EUROPEAN PATENT APPLICATION

(11) **EP 1 550 947 A2**
(43) Date of publication of application: **06.07.2005**
(21) Application number: 04078457.1
(22) Date of filing: 20.12.2004
(51) Int. Cl.: G06F 3/14, G06F 3/147, G06F 15/80

(54) **Configurable tiled emissive display**

(30) Priority: 23.12.2003 EP 03079177; 23.12.2003 US 743966
(71) Applicant: BARCO N.V., 8500 Kortrijk (BE)
(72) Inventor: Willem, Patrick, 8400 Oostende (BE); Dedene, Nele, 3530 Houthalen-Helchteren (BE); Van Hille, Herbert, 85737 Ismaning (DE); Thielemans, Robbie, 9810 Nazareth (BE)
(74) Representative: Bird, William Edward

(57) **Abstract**

The present invention relates to a configurable emissive display tile, e.g. an organic light-emitting diode (OLED) display tile and associated methods for use in a tiled large-screen display application. The OLED tile assembly of the present invention is capable of operating either as an autonomous display or, alternatively, may operate within a set of OLED display tiles forming a larger tiled display. An embodiment of an OLED tile assembly (100) according to an embodiment of the present invention is shown in Fig. 1C, including a power supply (158), a cooling system with cooling fans (160) and cooling blocks (146) and a control system, comprising a control board (154) with processor, an OLED board (142) and a substrate (140). It furthermore includes a digital video interface and an automatic addressing system The present invention further includes a method of initial assembly, automatic configuration, and calibration of the tiled OLED display and a method of replacing, adding, or removing one or more OLED tile assemblies in a larger tiled display.

## Description

### Field of the invention

The present invention relates to a modular large-screen emissive display such as an organic light-emitting diode (OLED) display. In particular, this invention relates to a scalable display composed of autonomous and interchangeable tiles. The present invention also provides a method for automatic configuration of a tiled emissive display such as an OLED display, and a method for replacing tiles in a tiled emissive display such as an OLED display.

### Background of the Invention

OLED technology incorporates organic luminescent materials that, when sandwiched between electrodes and subjected to a DC electric current, produce intense light of a variety of colours. These OLED structures can be combined into the picture elements, or pixels, that comprise a display or a tile of a complete display. OLEDs are also useful in a variety of applications as discrete light-emitting devices or as the active element of light-emitting arrays or displays, such as flat-panel displays in watches, telephones, laptop computers, pagers, cellular phones, calculators, and the like. To date, the use of OLED light-emitting arrays or displays has been largely limited to small-screen applications such as those mentioned above.

The market is now, however, demanding larger displays with the flexibility to customise display sizes. For example, advertisers use standard sizes for marketing materials; however, those sizes differ based on location. Therefore, a standard display size for the United Kingdom differs from that of Canada or Australia. Additionally, advertisers at trade shows need bright, eye-catching, flexible systems that are easily portable and easy to assemble and disassemble. Still another rising market for customisable large display systems is the control room industry, in which maximum display quantity, quality, and viewing angles are critical. Demands for large-screen display applications possessing higher quality and higher light output has led the industry to turn to alternative display technologies that replace older LED and liquid crystal displays (LCDs). For example, LCDs fail to provide the bright, high light output, larger viewing angles, and high resolution and speed requirements that the large-screen display market demands. By contrast, OLED technology promises bright, vivid colours in high resolution and at wider viewing angles. However, the use of OLED technology in large-screen display applications, such as outdoor or indoor stadium displays, large marketing advertisement displays, and mass-public informational displays, is only beginning to emerge.

Large screen displays are often modular or tiled displays made from smaller modules or displays that are then combined into larger tiles. These tiled displays are manufactured as a complete unit that can be further combined with other tiles to create displays of any size and shape. However, the individual tiles forming a tiled display are typically not capable to operate as a full display alone. What is needed is an OLED tile that may operate standing alone as an autonomous display or alternatively may operate within a set of tiles to form a larger tiled display. Consequently, what is further needed is a scalable OLED display tile that reduces system architecture complexity and a method of associating and configuring an OLED tile automatically upon installation. Lastly, what is needed is a scalable OLED display tile that allows distributed and parallel processing, thereby reducing the complexity of the overall system processing requirements.

An example tiled display is described in WO 99/41732, entitled, "Tiled electronic display structure." The '732 patent application describes a tiled display device that is formed from display tiles having pixel positions defined up to the edge of the tiles. Each pixel position has an OLED active area that occupies approximately twenty-five percent of the pixel area. Each tile includes a memory that stores display data and pixel driving circuitry that controls the scanning and illumination of the pixels on the tile. The pixel driving circuitry is located on the back side of the module and connections to pixel electrodes on the front side of the tile are made by vias that pass through portions of selected ones of the pixel areas that are not occupied by the active pixel material. The tiles are formed in two parts - an electronics section and a display section. Each of these parts includes connecting pads that cover several pixel positions. Each connecting pad makes an electrical connection to only one row electrode or column electrode. The connecting pads on the display section are electrically connected and physically joined to corresponding connecting pads on the electronics section to form a complete tile. Each tile has a glass substrate on the front of the tile. Black matrix lines are formed on the front of the glass substrate and the tiles are joined by mullions that have the same appearance as the black matrix lines.

Although the tiled display described in the '732 patent application provides a means for interconnecting tiles to create a large display system, '732 patent application fails to provide a scalable OLED display tile that reduces system architecture complexity and a method of associating and configuring an OLED tile automatically upon installation. Furthermore, the tiled OLED display needs a high bandwidth for calculations done in a central processor.

### Summary of the invention

It is an object of the present invention to provide an emissive display that is scalable and reduces the complexity of the overall system processing requirements as well as a method of operating the same.

It is another object of this invention to provide a scalable emissive display tile that reduces system architecture complexity as well as a method of operating the same.

It is yet another object of this invention to provide a way of associating and configuring an emissive tile, e.g. an OLED tile, automatically upon installation.

The above objectives are accomplished by a method and device according to the present invention.

In a first aspect, the present invention relates to a tiled emissive, e.g. an OLED display for displaying an image. The tiled emissive, e.g. OLED display comprises a plurality of OLED tile assemblies mechanically coupled together, and a processing means for performing real-time calculations with respect to the image to be displayed. The processing means according to the present invention is a distributed processing means which is distributed over the plurality of emissive display, e.g. OLED tile assemblies, so that each emissive display, e.g. OLED tile assembly is suitable for handling a different portion of the image for performing real-time calculations. Each emissive display tile assembly may be adapted for receiving a non-reduced data signal, i.e. a data signal comprising pixel info, corresponding to the image to be displayed on the tiled emissive display, and for parsing this received non-reduced data signal into packets associated with the location of that tile assembly within the emissive display. Preferably a complete data signal is sent around to all emissive display tile assemblies of the tiled display, the data signal being an image-wise spatially scalable bit stream. A tile assembly may be provided with means for selecting a portion of the scalable bit stream, e.g. a truncation means for truncating the bit stream, for displaying on the display tile assembly, e.g. a processor present on a tile assembly can perform a real time selection of a portion of the data in the bit stream needed for displaying on the tile assembly by a simple action such as e.g. truncation of the bit stream.
A tile can automatically configure its operational characteristics, and the tiles associate/communicate with one another upon installation, to form an integral display. However, preferably this communication happens between every two serially connected tile assemblies, without any mutual communication between any tile assemblies in the display which are non-adjacent in the serial connection. The tiles have electrical connections for access to the distributed processing means.

The tiled emissive, e.g. OLED display can have distributed processing means which are suitable for performing image upscaling or downscaling as necessary at each emissive display, e.g. OLED tile assembly. For the image upscaling or downscaling a high-level scaling algorithm can be used. This high-level scaling algorithm may be a 100% accurate scaling algorithm.

The distributed processing means of the plurality of emissive display, e.g. OLED tile assemblies comprise processing elements operating in parallel.

An emissive display, e.g. OLED tile assembly may be provided with a data input and/or a data output connection for receiving data from or transmitting data to another emissive display , e.g. OLED tile assembly via any of suitable connection topology, e.g. a feed-and-drop line, a multi-line connection, a daisy chain connection or a star connection. Furthermore, the emissive display, e.g. OLED tile assemblies may be provided with a power input and/or a power output connection for receiving power from or transmitting power to another emissive display, e.g.OLED tile assembly via any of a feed-and drop line, a multi-line connection, a daisy chain connection or a star connection or there may be a separate power connection.

The emissive display, e.g. OLED tile assemblies may be provided with a single connector allowing to combine both power and data transmission.

The emissive display, e.g. OLED tile assemblies may furthermore be provided with a local memory means for storing configuration data. The memory means is preferably a nonvolatile memory. The emissive display, e.g. OLED tile display may furthermore be adapted so that the emissive display, e.g. OLED tile assemblies can be repaired while the other tiles continue working, i.e. the tiles may be hot-swap enabled. This can mean that e.g. the controller or the power supply in a tile may be replaced without disconnecting the power and data connectors. In this way the internal parts of the tile may be replaced without the other tiles having to cease their operation.

Furthermore, the tiled emissive display, e.g. OLED display according to the invention may have an adjustable size, e.g. by addition or subtraction of tiles. Due to the sending of the non-reduced data signal (pixel information) there is no limit on the number of tiles in the tiled emissive display as the same data signal is sent to all tiles independent of the number of tiles present in the display. Tiles can take the portion of the data of the bit stream which they need for displaying due to a one-time initialisation during set-up.

In a second aspect, the invention relates to a method of automatically configuring a tiled emissive display, e.g. OLED display comprising a plurality of emissive display, e.g. OLED tile assemblies mechanically coupled together, whereby the tiled emissive display, e.g. OLED display is intended for displaying an image. The method comprises assigning to each emissive display, e.g. OLED tile assembly a unique address for use in steering content and communication data, distributing to each emissive display, e.g. OLED tile assembly display co-ordinates that designate which portion of the image to be displayed it will show, configuring the emissive display, e.g. OLED tile assemblies by reading, for each emissive display, e.g. OLED tile assembly, configuration data stored in a memory device local to the emissive display, e.g. OLED tile assembly, and using this information in a distributed processing means local to the emissive display, e.g. OLED tile assembly to configure the resolution of the emissive display, e.g. OLED tile assembly.

The method furthermore may comprise, before assigning to each emissive display, e.g. OLED tile assembly a unique address, detecting the presence of the emissive display, e.g. OLED tile assemblies in the tiled emissive display, e.g. OLED display.

Additionally, calibrating the emissive display, e.g. OLED tile assemblies to match overall display brightness and/or to correct individual pixel non-uniformity may be performed.

Furthermore, the method may comprise, before assigning to each emissive display, e.g. OLED tile assembly a unique address, mechanically assembling and activating the tiled emissive display, e.g. OLED display. This mechanical assembling may include providing a feed-and-drop line, a daisy chain connection, a multi-line connection or a star connection for data and/or power from one emissive display, e.g. OLED tile assembly to another.

In a third aspect, the present invention relates to a method of replacing at least one emissive display, e.g. OLED tile assembly in a tiled emissive display, e.g. OLED display intended for displaying an image. The method comprises mechanically replacing at least one emissive display, e.g. OLED tile assembly in the tiled emissive display, e.g. OLED display, assigning to the at least one replaced emissive display, e.g. OLED tile assembly a unique address for use in steering content and communication data, assigning to the at least one replaced emissive display, e.g. OLED tile assembly display co-ordinates that designate which portion of the image to be displayed it will show, configuring the at least one replaced emissive display, e.g. OLED tile assembly by reading, for each replaced emissive display, e.g. OLED tile assembly, configuration data stored in a memory device local to the at least one emissive display, e.g. OLED tile assembly, and using this information in a distributed processing means local to the replaced emissive display, e.g. OLED tile assembly to configure the resolution of the emissive display, e.g. OLED tile assembly. The method may also include the step of detecting that a display tile has been removed from the tiled display and storing information with respect to that part of the image which the removed tile displayed. It further includes assigning to a new tile, the part of the image which was displayed by the removed tile.

The method furthermore may comprise calibrating the at least one replaced emissive display, e.g. OLED tile assembly to match overall display brightness and/or to correct individual pixel non-uniformity.

Before assigning the unique address, the method may include determining whether the number or arrangement of tiles has been altered. If the number or arrangement of the tiles has been altered, the method may furthermore comprise configuring the tiled emissive display, e.g. OLED display according to the above mentioned methods of configuring.

The method furthermore may include mechanically replacing at least one emissive display, e.g. OLED tile assembly whereby the connection of the different emissive display, e.g. OLED tile assemblies is restored, for data and/or power from or to at least one other emissive display, e.g. OLED tile assembly.

### Brief description of the drawings

**Fig. 1A** is a perspective view of a viewable side of an OLED tile assembly in accordance with an embodiment of the present invention.
**Fig. 1B** is a perspective view of a non-viewable side of an OLED tile assembly in accordance with an embodiment of the present invention.
**Fig. 1C** is an exploded view of an OLED tile assembly in accordance with an embodiment of the present invention.
**Fig. 2** is a cross-sectional drawing of the OLED tile assembly taken along line A-A of **Fig. 1B**.
**Fig. 3** is a cross-sectional drawing of a **Detail A** of **Fig. 1C**.
**Fig. 4** is a perspective view of a single mask for use with an OLED tile assembly of the present invention.
**Fig. 5A** schematically illustrates a tiled OLED display and a multi-line method of signal and power distribution in accordance with an embodiment of the present invention.
**Fig. 5B** schematically illustrates a tiled OLED display and a daisy-chain method of signal and power distribution in accordance with an embodiment of the present invention.
**Fig. 6** illustrates a functional block diagram of an OLED tile control system for use in an OLED tile assembly in accordance with an embodiment of the present invention.
**Fig. 7** illustrates the overall architecture of an OLED tile control system in accordance with an embodiment of the present invention.
**Fig. 8** is a flow diagram of a method of initial assembly, automatic configuration, and calibration of a tiled OLED display in accordance with an embodiment of the present invention.
**Fig. 9** is a flow diagram of a method of replacing, adding, or removing one or more OLED tile assemblies in a tiled OLED display.

### Detailed description of illustrative embodiments

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

The present invention will be described with reference to an OLED display, especially an OLED tiled display but the present invention is not limited to OLED displays but may be used with any emissive displays, especially tiled emissive displays. Emissive displays generally comprise an array of emissive pixel elements, each pixel element or group of pixel elements being individually addressable so as to display an arbitrary image. Such displays are often described as fixed format displays to distinguish them over CRT displays. The term "fixed format" refers to the fact that addressable pixel elements at fixed positions are used to display the image. Fixed format does not mean that the displays cannot be made scalable, e.g. tiled. Suitable emissive displays include Light Emitting Diode (LED) displays, electroluminescent displays such as EL displays, Plasma displays, etc.
In the following reference will be made to OLED displays but such reference applies equally well to any emissive display. Accordingly in one aspect of the present invention, a configurable OLED display tile and associated methods for use in a tiled large-screen display application are provided. The OLED display tile according to an embodiment of the present invention is capable of operating either as an autonomous display or alternatively of operating within a set of OLED display tiles forming a larger tiled display. The present invention may also include assemblies of pixel arrays, e.g. they may be tiled displays and may comprise modules made up of tiled arrays which are themselves tiled into supermodules. Thus, the word display relates to a set of addressable pixels in an array or in groups of arrays. Several display units or tiles may be located adjacent to each other to form a larger display, i.e. multiple display elements are physically arranged side-by-side so that they can be viewed as a single image. The physical hardware implementation of the OLED display tile or OLED tile assembly of the present invention and the architecture of a larger tiled display formed by an k by I array of OLED tile assemblies provide distributed processing that has the result of a less complex display hardware and software system, thereby avoiding the need for high-bandwidth calculations by a central processor.

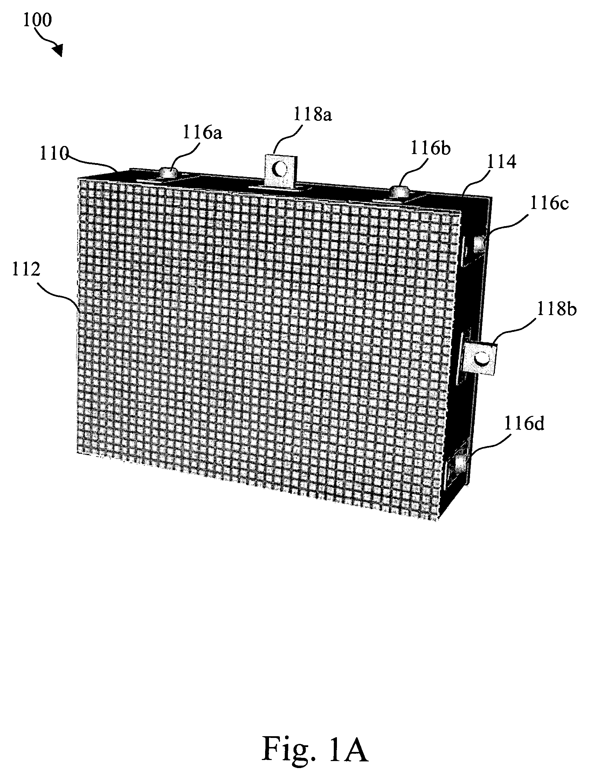

**Fig. 1A** is a perspective view of a viewable side of an OLED tile assembly **100** in accordance with an embodiment of the invention. OLED tile assembly **100** is suitable for use as an autonomous display or alternatively may operate within a set of OLED tile assemblies **100** to form a larger tiled display. OLED tile assembly **100** includes a precision frame **110**; a plurality of masks **112**; an enclosure **114**; a plurality of positioning plates and pins **116** (e.g., positioning plate and pin **116a**, positioning plate and pin **116b**, positioning plate and pin **116c**, and positioning plate and pin **116d**), and a plurality of clamp elements **118** (e.g., alignment tab **118a** and alignment tab **118b)** disposed within precision frame **110**, as shown in **Fig. 1A**.

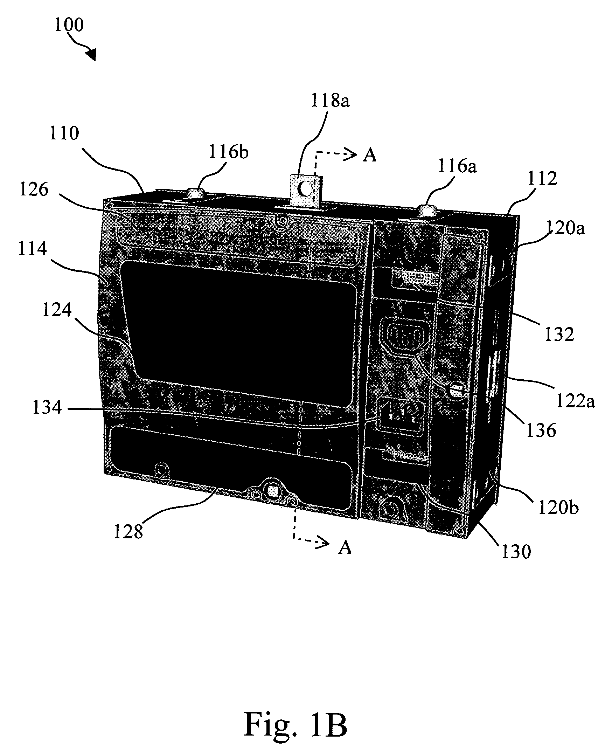

**Fig. 1B** is a perspective view of a non-viewable side of OLED tile assembly **100** in accordance with an embodiment of the invention. In this view, it is apparent that OLED tile assembly **100** further includes a plurality of positioning plates and holes **120** (e.g., positioning plate and hole **120a,** positioning plate and hole **120b),** and a plurality of alignment slots **122** (e.g., alignment slot **122a),** all disposed within precision frame **110**. Disposed within enclosure **114** is an air inlet **124,** a first air outlet **126,** a second air outlet **128**, a data input connector **130,** a data output connector **132,** a power input connector **134,** and a power output connector **136,** as shown in **Fig. 1B**.

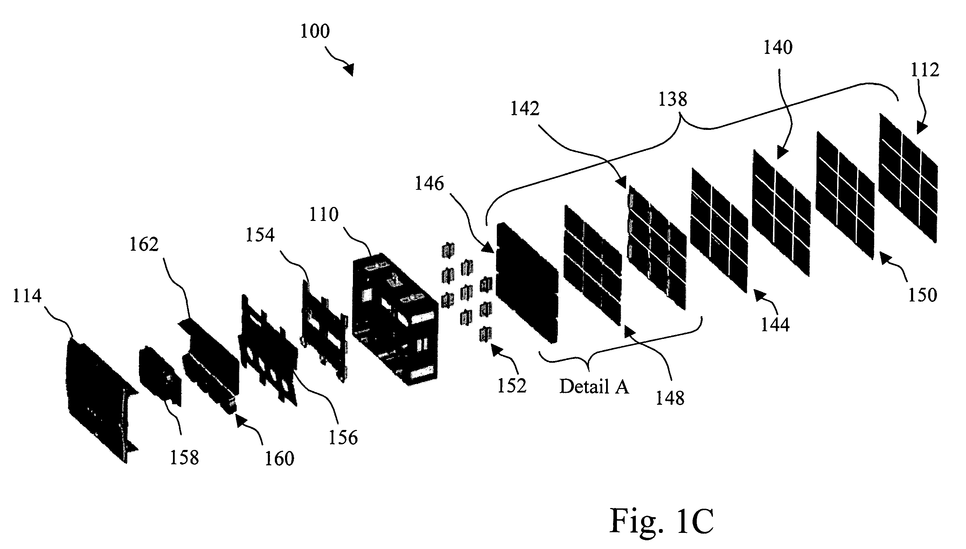

**Fig. 1C** is an exploded view of OLED tile assembly **100** in accordance with an embodiment of the invention. In this view, it is apparent that OLED tile assembly **100** includes, in order from front to back, the front side being the side suitable for displaying the image, an array of OLED module assemblies **138**, each further including a mask **112**, a substrate **140**, an OLED board **142**, optionally a quantity of underfill material **144**, a cooling block **146**, a quantity of potting material **148**, and a circular polariser **150**; a plurality of connectors **152;** precision frame **110;** a control board **154;** an assembly bracket **156;** a power supply (P/S) **158** and a plurality of cooling fans **160,** both of which are mounted upon assembly bracket **156;** an insulation sheet **162** for P/S **158,** and enclosure **114,** as shown in **Fig. 1C**. With reference to **Fig. 1A, Fig. 1B,** and **Fig. 1C**, it is noted that OLED tile assembly **100** is sized according to the array of OLED module assemblies **138.** In this example, a 3x3 array of OLED module assemblies **138** is illustrated. However, OLED tile assembly **100** is not limited to this example: the physical size of OLED tile assembly **100** and its elements may vary depending upon the configuration of an *n* by *m* array of OLED module assemblies **138,** which is selectable.

With reference to **Fig. 1A**, **Fig. 1B**, and **Fig. 1C**, the elements of OLED tile assembly **100** are described as follows.

Precision frame **110** serves as the primary mechanical structure upon and within which all other elements of OLED tile assembly **100** are mounted. Precision frame **110** is formed of any suitably strong material, such as light metal alloys, that will support the structure of OLED tile assembly **100**. Precision frame **110** is sized according to a predetermined array configuration of OLED module assemblies **138** housed within the precision frame **110**.

Mounted upon a first side of precision frame **110** are a first positioning plate and pin **116a** and a second positioning plate and pin **116b**, with a first alignment tab **118a** positioned therebetween. Mounted upon a second side (adjacent to the first side) of precision frame **110** are a third positioning plate and pin and a fourth positioning plate and pin, with a second alignment tab positioned therebetween. These, however, are not visible in the perspective view of **Fig. 1C**. Similarly, mounted upon a third side of precision frame **110** are a first positioning plate and hole **120a** and a second positioning plate and hole **120b,** with a first alignment slot **122a** positioned therebetween. Mounted upon a fourth side (adjacent to the third side, and not visible in **Fig. 1C**) of precision frame **110** are a third positioning plate and hole and a fourth positioning plate and hole, with a second alignment slot positioned therebetween.

Enclosure **114** also can comprise 2 separate parts: i.e. one part with the air inlet and outlets and one part with the data and power input and output connectors. This feature combined with the correct internal arrangements in the tile allows to replace e.g. the controller or the power supply in a tile, without disconnecting the power and data connectors. When the internal parts of the tile that has to be repaired are replaced, all the other tiles will continue working. This feature of the display is called "hot swap capability". The hot swap capability is not shown in any of the drawings.

Positioning plates and pins **116**, clamp elements **118**, positioning plates and holes **120**, and alignment slots **122** are typically formed of stainless steel. Positioning plates and pins **116**, clamp elements **118**, positioning plates and holes **120**, and alignment slots **122** serve as alignment and locking mechanisms for use when a plurality of OLED tile assemblies **100** are assembled in the *k* by *l* array to form a larger tiled display. More specifically, positioning plates and pins **116** and clamp elements **118** of one OLED tile assembly **100** align and mechanically couple to positioning plates and holes **120** and alignment slots **122**, respectively, of an adjacent OLED tile assembly **100**.

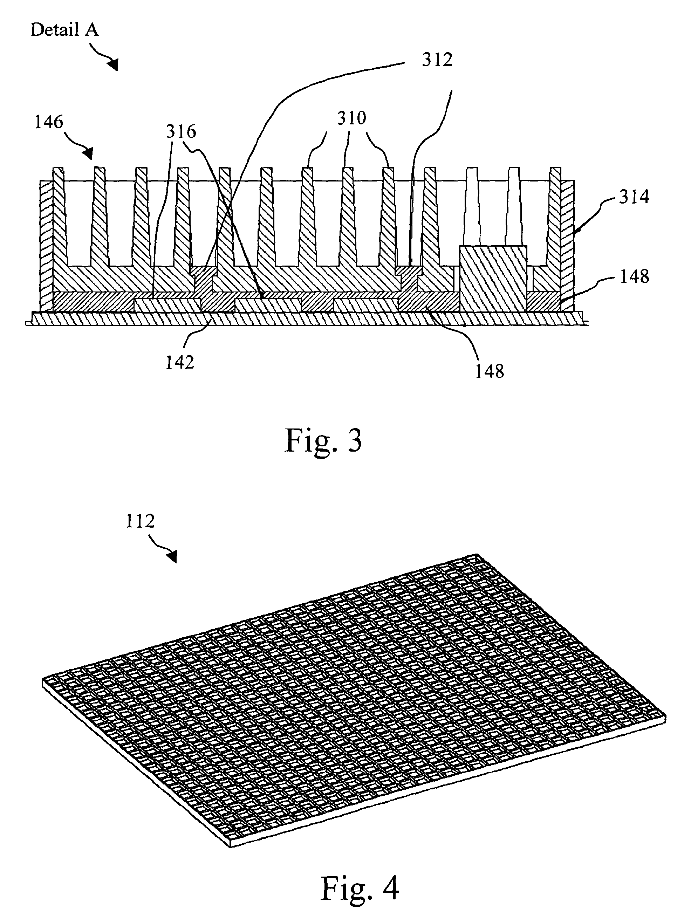

Each mask **112** is sized accordingly and placed on the viewable side of each respective OLED module assembly **138**. Collectively, masks **112** are used to hide the seams between substrates **140** within OLED tile assembly **100** when assembled. Furthermore, masks **112** are used to hide the seams between OLED tile assemblies **100** within the *k* by *l* array of OLED tile assemblies **100** that form a larger tiled display. Each mask **112** forms a grid of dark lines; thus, physical gaps between elements become impossible to see because they disappear among the other lines. The pitch of the dark lines in the mask is usually equal to the pixel pitch or to a multiple of the pixel pitch. Further details of mask **112** are found in reference to **Fig. 4**.

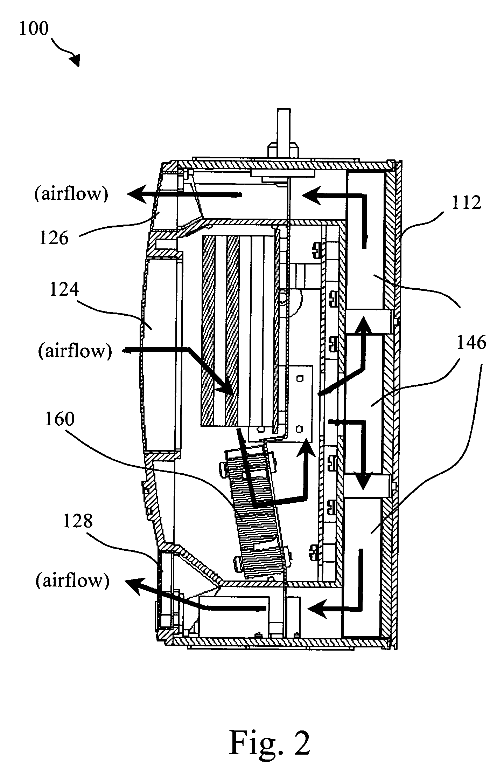

Enclosure **114** forms the structure of the non-viewable side of OLED tile assembly **100**. Enclosure **114** is formed of any suitably strong material, such as light metal alloy, and is mechanically attached to one side of precision frame **110**. Disposed within enclosure **114** are air inlet **124**, first air outlet **126**, and second air outlet **128**, as shown in **Fig. 1B**. Air inlet **124,** first air outlet **126,** and second air outlet **128** are formed of any suitable material that is permeable to air, such as an iron or aluminium grid. Air inlet **124** serves as the ambient air intake to OLED tile assembly **100**, for cooling the OLED tile assembly **100**. By contrast, first air outlet **126** and second air outlet **128** serve to exhaust warm air generated by OLED tile assembly **100** during operation. The movement of air into and out of OLED tile assembly **100** is due to the action of cooling fans **160.** Further details of the airflow within OLED tile assembly **100** are illustrated in reference to **Fig. 2**.

Also disposed within enclosure **114** are data input connector **130,** data output connector **132,** power input connector **134,** and power output connector **136,** as shown in **Fig. 1B**. Data input connector **130** and data output connector **132** are conventional signal connectors, such as MOLEX, DVI-digital 74320-3004. Data input connector **130** provides an electrical connection for receiving video data signals, e.g. serial data signals, containing the pixel information of the current video frame information to be displayed on OLED tile assembly **100** and for receiving serial control data signals from a general processor (not shown). The video data signals may be non-reduced data signals, whereby with reduced data signals is meant all data signals which do not directly, without further processing, give a bitmap (pixel info) of the data to be shown, such as e.g. a vector representation of the data, or data compressed by any possible compression method.

The video data signals transmitted to the tiles according to the present invention are in the form of an image-wise spatially scalable bit stream. The bit stream comprises pixel data to be displayed by the different tiles. A real time selection of the data needed for a tile to display can be done by a simple action, such as for example truncation. No control data needs to be added to the video data signal in order for a tile to know which part of the video data signal it needs to display, i.e. the video data signal comprises only pixel information. This is different from prior art embodiments, where in the bit stream of the data signal control signals are included, e.g. a control signal for indicating that the next x number of bits are intended for tile number y. According to the present invention, control signals are provided from a central processing unit to each of the distributed processing units so as to set-up each tile to know which part of the data stream it will need for displaying. As the complete bit stream is offered to the distributed processors of each tile, and control signals with regard to separation of the bit streams over the tiles are sent to the tiles during an initialisation procedure, the tiles can function independently from each other, requiring no communication with other tiles with regard to control signals or data exchange. As there is no data exchange between tiles, there is less data transmission, making more resource available for signal processing in the distributed processing means.

Let ψ_{D} = [1, ..., i, ..., δ₁]x[1, ...,j, ..., δ₂] be a 2-dimensional discrete space of size δ₁xδ₂. A digital image I (or short image) is an application ψ_{D} → D(I) where D(I) is the value domain of the image obtained from sampling a scalar field σ(x) , x ∈ 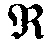 ², over the 2-dimensional discrete space. Typically D(I) = {0,1} for a black and white image (also called a binary image), D(I) = [0,...,255] for 8-bit grey level images, and D(I) = [0,...,255]x[0,...,255]x[0,...,255] for 24-bit colour images. A pixel P is an element of ψ_{D}, and the value of the pixel P in the image I is defined as I(P). A pixel P is identified in the image by its two co-ordinates (i,j) ∈ ψ_{D}.

An image to be displayed on a tiled display is made of pixels P_{i,j} each having an image value I(P_{i,j}). The bit stream distributed over the tiles comprises video data for the image to be displayed. The bit stream consists of a concatenation of the bits each representing a pixel value in the image. A portion of the bit stream is mappable to the data supplied to the tile for display of a part of the image. This means that in the bit stream information for individual fields of the image to be displayed is present, such as information for parts of the image to be displayed on different tiles. This information may be present in blocks, data of one block being serially available in the bit stream after data for another block, which corresponds to data for an image to be displayed on a tile being serially available in the bit stream after data for an image to be displayed on another tile. Alternatively, information of different blocks may be dispersed or mixed into each other in the bit stream, e.g. for a 9-tile display every 9^{th} bit may be grey scale information for a pixel of a first of the tiles.

When the bit stream arrives at the processor of a tile, the receiving processor knows, from an initialisation or set-up procedure, which part of the bit stream it needs for displaying a part of the image on the tile, e.g. it needs data for every x-th pixel in the bit stream, or it needs data of the x-th block. Due to the fact that the bit stream is a scalable bit stream, the processor can simply select the bits it needs by truncation of the scalable bit stream, i.e. by discarding the information it does not need, i.e. data which does not fall in a window of interest. The processor does not need to reorganise the bit stream, and neither does it need to calculate pixel data. Therefore selection of the image from the bit stream can happen in real time. Mutual data exchanges between a large number of non-adjacent tiles are not required, and therefore the system is not restricted as far as calculation possibilities are concerned.

According to embodiments of the present invention, the information in the data bit stream always has a same pre-determined format, e.g. it may be data for an image of 800 x 600 pixels, and this independent of the format of the emissive display, i.e. of the number of tiles in the emissive display, and of the number of pixels in each tile. The distributed processing means on each tile, when receiving the bitstream and after selection of the part thereof it needs, may perform image upscaling or image downscaling, depending on the format of the display with regard to the pre-determined format of the data signal bit stream. Due to the bit stream being independent of the emissive display, a constant or fixed bit rate is applied to the input of each tile, independent of the format of the wall. In the example given the bit rate is for example 800x600x50Hz. Other possible bitrates are e.g. 1024x768 at 30 Hz, or 1600x400 at 60 Hz. The maximum usable bitrate at present is 32 MHz. By using a constant bit rate no setting needs to be done during a set-up or initialisation procedure for the timing of the bitrate. This has the advantage that the input to the processing chip is a constant clock signal, which makes the design of the input processor easier. Furthermore, with regard to EMI radiation an optimised filter can be provided, while in case of a variable bitrate a variable EMI filter needs to be provided, which is more difficult to implement and often is less efficient. Due to the constant bitrate, the aspect ratio of the image to be displayed does not matter: a bitrate of 800x600 may as well be used e.g. for an image of 800 by 600 pixels, as for an image of 8000 by 60 pixels.

If image upscaling needs to be performed in the distributed processors, then either e.g. every pixel can be repeated for example once, or an intermediate pixel value between every two neighbouring pixel values can be calculated. When doing this, the processor may need extra information from pixels at or adjacent the window boundaries. Therefore, a progressive selection of the boundaries of the window in the image to be displayed on each tile may be provided by reading a larger or smaller part of the bit stream than what effectively corresponds to the part of the data to be displayed on that tile.

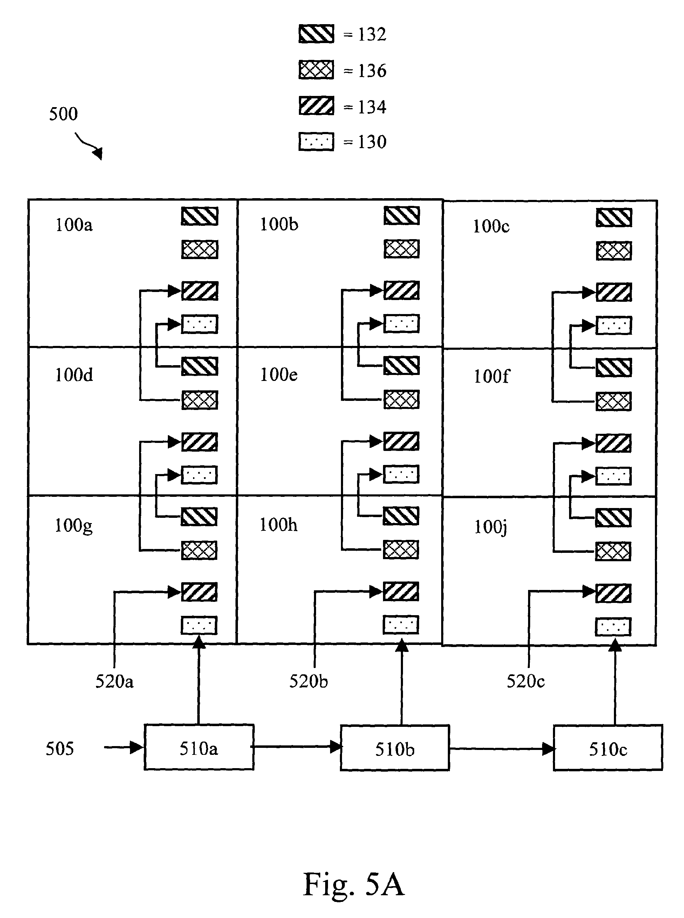

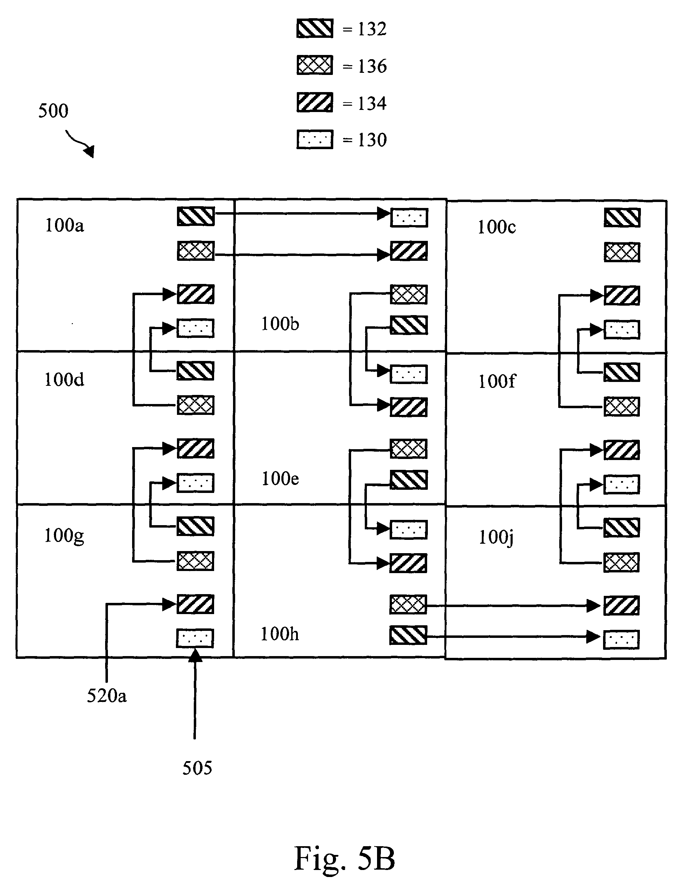

After having received a video signal, if applicable, OLED tile assembly **100** subsequently re-transmits the video and control data signals to a next, preferably adjacent, OLED tile assembly **100** via data output connector **132**. Power input connector **134** and power output connector **136** are conventional power connectors capable of handling up to e.g. 265 AC volts and 10 amps, such as power input connector IEC60320-C14 or power output connector IEC60320-C13. Power input connector **134** provides an electrical connection for receiving AC input power to OLED tile assembly **100**. If applicable, OLED tile assembly **100** subsequently transmits this AC power to a next, preferably adjacent, OLED tile assembly **100** via power output connector **136**. The AC voltage from power input connector **134** is bussed directly to power output connector **136**. An illustration of distribution methods of signal and power distribution within a tiled OLED display is found with reference to **Fig. 5A** and **Fig. 5B**. For compactness issues, the data and power connections can also be integrated in one connector block.

In embodiments of the present invention, a plurality of tiles have a serial connection without mutual communication possibilities between tiles which are non-adjacent in the serial connection.

Each OLED module assembly **138**, which includes mask **112**, substrate **140**, OLED board **142**, optional underfill material **144**, cooling block **146**, potting material **148**, and circular polariser **150**, is representative of a structure for forming a common-anode, passive-matrix, OLED array with associated drive circuitry. In the common-anode configuration, a current source is arranged between each individual cathode of the OLED devices and ground, while the anodes of the OLED devices are electrically connected in common to a positive power supply. As a result, the current and voltage are completely independent of one another and small voltage variations do not result in current variations eliminating light output variations due to voltage variations. Its elements are described as follows.

Substrate **140** of OLED module assembly **138** is formed of a non-conductive, transparent material, such as glass for example. Deposited upon substrate **140** is a pixel array formed of a plurality of addressable discrete OLED devices or pixels. Those skilled in the art will appreciate that the OLED devices for forming graphics display are typically arranged logically in rows and columns to form an OLED array or matrix. The term "logically arranged in rows and columns" refers to the fact that the actual display does not have to be formed in Cartesian co-ordinates but may be provided in other co-ordinate systems such as polar. However, in all of these systems there are equivalents to rows and columns, e.g. arcs of circles and radii. These are therefore logically arranged in rows and columns even if they are not physically arranged in such a manner. Substrate **140** further includes electrical contacts to and from anode and cathode lines, which respectively are electrically connected to the anodes of a row of OLED pixels and to the cathodes of a column of OLED pixels.

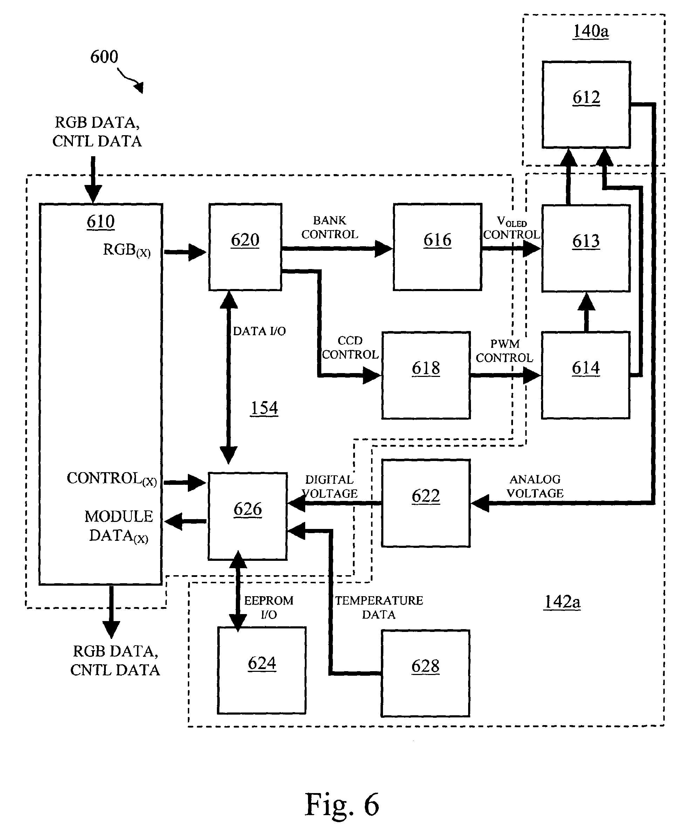

OLED board **142** of OLED module assembly **138** is a conventional printed circuit board (PCB) formed of a material such as ceramic or **FR4** or **FR5**, i.e. known glass laminates widely used for subtractive printed circuit board fabrication because of their ability to meet a wide variety of processing conditions. On the printed circuit board are mounted the drive circuitry devices. A functional block diagram of OLED board **142** is described in reference to **Fig. 6**. OLED board **142** includes wiring to facilitate electrical signal and power connections to and from the pixel array upon substrate **140.** OLED board **142** further includes a set of counter contacts for providing electrical connections to substrate **140**, for example via well-known solder bump technology (not shown). Through an alignment procedure, substrate **140** is placed on top of the prepared OLED board **142**. Substrate **140** and OLED board **142** are subsequently placed into an oven, thereby melting the solder and forming a solder joint between substrate **140** and OLED board **142**.

Optionally, underfill material **144** is used in OLED module assembly **138**, which is electrically non-conductive and thermally conductive material, such as liquid epoxy material, that is inserted between substrate **140** and OLED board **142**. Underfill material **144** can be applied as a liquid after substrate **140** and OLED board **142** have been connected to each other by solder joints. Underfill material **144** can be used to remove the air gap between these solder joints, thereby increasing the heat transfer between substrate **140** and OLED board **142** and thus improving the cooling. After application as a liquid, underfill material **144** is cured, thereby forming a solid material. Furthermore, due to the presence of underfill material **144**, thermal stresses on the solder joints are redistributed among substrate **140**, OLED board **142**, underfill material **144**, and the solder, thereby increasing the life of the solder joints by mitigating fatigue. Although the presence of underfill material **144** improves the performance of OLED module assembly **138**, underfill material **144** is optional and, thus, may be omitted from the structure of OLED module assembly **138**.

Cooling block **146** of OLED module assembly **138** is a conventional heat sink device formed of thermally conductive material, such as aluminium, that is thermally bonded to OLED board **142** via potting material **148**. Potting material **148** is a thermally conductive material, such as Loctite product Hysol EE1087 in combination with the hardener HD 3561. Potting material **148** is injected between OLED board **142** and cooling block **146** in order to improve the heat transfer and thus the cooling therebetween. Potting material **148** is injected as a liquid and is then cured to form a solid material. Further details of cooling block **146** and potting material **148** are found in reference to **Fig. 3**.

Circular polariser **150** of OLED module assembly **138** is mounted between substrate **140** and mask **112**. Circular polariser **150** is a well-known optical device formed of a material, such as e.g. polycarbonate. Circular polariser **150** is an absorptive polariser that allows one type of circular polarisation (left or right) to transmit largely unattenuated, while it will absorb the other circular polarisation (right or left). Circular polariser **150** is used to reduce the amount of ambient light reflections on substrate **140**. The ambient light is unpolarised and therefore part of it is directly absorbed by the circular polariser and the other part is converted into left (or right) circular polarised light by circular polariser **150**. This transmitted left (or right) circular polarised light reflects on substrate **140** and is converted into right (or left) circular polarised light. This right (left) circular polarised light is absorbed by circular polariser **150**. Circular polariser **150** increases the contrast of the display. An example of an absorbing circular polariser **150** is a Nitto Denko model SEG1425DU + NRF QF01A.

Connectors **152** are standard connectors for transferring signals and power from control board **154** to the plurality of OLED boards **142**. There is one connector **152** per OLED module assembly **138**. Connectors **152** must be dimensioned to span the distance between OLED boards **142** and control board **154** while taking into account the thickness of cooling blocks **146**. In doing so, clearance holes are provided within precision frame **110** and cooling blocks **146** to allow connectors **152** to pass therethrough. An example of connector **152** is a BergStak Connector, product number: 61082-06YABC.

Control board **154** is a conventional printed circuit board (PCB) formed of a material such as ceramic or FR4, upon which are mounted the local processing and control devices needed to operate the *n* by *m* array of OLED module assemblies **138**. In general, control board **154** performs pre-processing tasks, such as gamma correction, gamma adjustment of the incoming signal, colour and light calibration according to measurements done at manufacture with a spectral camera and a colour meter, and image scaling algorithms. A functional block diagram of control board **154** is described in reference to **Fig. 6**.

Assembly bracket **156** is a mechanical structure for supporting both control board 154, P/S **158** and cooling fans **160** within OLED tile assembly **100,** as shown in **Fig. 1C**. Assembly bracket **156** is formed of any suitably strong material, such as steel.

P/S **158** is a conventional power supply that includes a programmable AC-to-DC converter (not shown) and a programmable voltage regulator (not shown). The voltage is regulated per OLED tile assembly **100**. An AC input voltage of between 170 and 265 volts is supplied to P/S **158** via power input connector **134** (see **Fig. 1B**). A DC output voltage of 5 to 25 volts at a maximum current of 7 amps is provided to control board **154** and to OLED module assemblies **138.** Furthermore, the DC power from P/S **158** is bussed to OLED module assemblies **138** in a passive manner by control board **154**.

Cooling fans **160** are conventional DC fans capable of providing a volume rate of airflow of between 2 and 5 cubic feet per minute (cfm) in order to maintain an operating temperature within OLED tile assembly **100** of between 10 and 50 °C. An example of cooling fan **160** is a Delta Electronics model BFB0505M. The number of cooling fans **160** mounted within OLED tile assembly **100** depends upon the *n* by *m* array configuration of OLED module assemblies **138** and the associated control board **154** and P/S **158** requirements. P/S **158** provides DC power to cooling fans **160**. P/S **158** also controls cooling fans **160**.

Insulation sheet **162** is an insulation sheet for the power supply, as shown in **Fig. 1C**. Insulation sheet **162** is formed of a suitable material, such as mica .

**Fig. 2** is a cross-sectional drawing of OLED tile assembly **100** taken along line A-A of **Fig. 1B**. **Fig. 2** is intended to illustrate the airflow within OLED tile assembly **100** and shows that air is drawn into OLED tile assembly **100** via air inlet **124** as a result of the action of cooling fans **160.** The airflow subsequently passes over cooling blocks **146** (see **Fig. 3**) and subsequently exhausts via first air outlet **126** and second air outlet **128** as shown in **Fig. 2**. In this way, heat generated by the active components of OLED module assemblies **138**, control board **154**, and P/S **158** is removed.

**Fig. 3** is a cross-sectional drawing of a **Detail A** of **Fig. 1C**. **Fig. 3** is intended to illustrate the injection process of potting material **148** between OLED board **142** and cooling block **146**. **Detail A** illustrates that cooling block **146** further includes a plurality of fins **310** that are typical of a heat-removing device. Also included within cooling block **146** is a plurality of injection points **312** that inject potting material **148** in liquid form. A potting calibre **314** is mounted along the perimeter edge of cooling block **146** and serves as a form for containing potting material **148**. Lastly, **Detail A** illustrates a plurality of components **316** mounted upon OLED board **142**. Components **316** are active and/or passive electrical components that generate heat when operating, such as the OLED devices and switches for example. Upon injection, potting material **148** fills the gap between cooling block **146** and OLED board **142** as well as the gaps between components **316**, thereby forming a heat transfer medium for efficiently transferring heat away from OLED board **142** and components **316.**

**Fig. 4** is a perspective view of a single mask **112** with OLED tile assembly **100** of the present invention. Mask **112** is a custom made device that is sized according to the size of its associated OLED module assembly **138**. Mask **112** may be formed of polyamide or polycarbonate, and the grid pattern formed therein is determined by the pixel pitch of its associated OLED module assembly **138**. In this example, the grid of mask **112** is designed for use with a 24x32 pixel array.

**Fig. 5A** and **Fig. 5B** illustrate two possibilities for signal distribution in a tiled OLED display **500**. **Fig. 5A** shows a multi-line distribution method of signal and power distribution in accordance with the invention. Tiled OLED display **500** is representative of a *k* by *l* array of OLED tile assemblies **100**. In this example, a 3x3 array is pictured. More specifically, **Fig. 5A** illustrates that tiled OLED display **500** includes, for example, OLED tile assemblies **100a**, **100b**, **100c**, **100d**, **100e**, **100f**, **100g**, **100h**, and **100j**. It is further illustrated that each OLED tile assembly **100** includes its associated data input connector **130**, data output connector **132**, power input connector **134**, and power output connector **136**. Lastly, tiled OLED display **500** further includes a plurality of data reclockers **510**, for example, data reclocker **510a**, data reclocker **510b**, and data reclocker **510c**.

The multi-line distribution method of signal distribution is described as follows. A DATA IN signal 505 from a central processing unit (not shown) is supplied to an input of data reclocker **510a.** DATA IN signal **505** is representative of video data and control data. The video data is under the form of an image-wise spatially scalable bit stream. Data reclocker **510a** subsequently re-transmits this video and control data to one OLED tile assembly **100** as well as to a next data reclocker **510**, i.e., in the example given, to an input of data reclocker **510b** and to data input connector **130** of OLED tile assembly **100g.** Similarly, data reclocker **510b** transmits the received video and control data signal to an input of data reclocker **510c** and to data input connector **130** of OLED tile assembly **100h.** Finally, data reclocker **510c** transmits the received video and control data to data input connector **130** of OLED tile assembly **100j**. This way, the DATA IN signal **505** is distributed to all OLED tiles assemblies **100** of one row of the tiled OLED display **500.** It is to be noted that the data links in the tiled OLED display **500** are bi-directional, so it is also possible to place data reclockers **510a**, **510b**, and **510c** on top of tiled OLED display **500**, instead of placing them at the bottom, thus feeding the DATA IN signal 505 to data input connectors **130** of OLED tile assemblies **100a**, **100b**, **100c**. These bi-directional links also make it possible to pass the DATA IN signal **505** from the end of one column to the beginning of the neighbouring column. It is likewise to be noted that the terms "row" and "column" are interchangeable, meaning that the data reclockers may distribute the DATA IN signal **505** to all OLED tiles assemblies **100** of one column of the tiled OLED display **500**.

Subsequently, the video and control data is transferred from one OLED tile assembly **100** to the next OLED tile assembly **100** along a same column if the DATA IN signal **505** was fed to all OLED tile assemblies **100** of a row, or to the next OLED tile assembly **100** along a same row if the DATA IN signal **505** was fed to all OLED tile assemblies **100** of a column. No means are provided for communication between tiles of different columns resp. rows, nor means for communication between non-adjacent tiles of one and the same column resp. row. Hereinafter, the situation of **Fig. 5A** is further described, i.e. the case in which the DATA IN signal **505** was fed to all OLED tile assemblies **100** along a same row. For example and with reference to **Fig. 5A**, the video and control data is transferred from OLED tile assembly **100g** to OLED tile assembly **100d** via an electrical connection between data output connector **132** of OLED tile assembly **100g** and data input connector **130** of OLED tile assembly **100d**, then from OLED tile assembly **100d** to OLED tile assembly **100a** via an electrical connection between data output connector **132** of OLED tile assembly **100d** and data input connector **130** of OLED tile assembly **100a**. Likewise, the video and control data is transferred from OLED tile assembly **100h** to OLED tile assembly **100e** via an electrical connection between data output connector **132** of OLED tile assembly **100h** and data input connector **130** of OLED tile assembly **100e,** then from OLED tile assembly **100e** to OLED tile assembly **100b** via an electrical connection between data output connector **132** of OLED tile assembly **100e** and data input connector **130** of OLED tile assembly **100b**. Lastly, the video and control data is transferred from OLED tile assembly **100j** to OLED tile assembly **100f** via an electrical connection between data output connector **132** of OLED tile assembly **100j** and data input connector **130** of OLED tile assembly **100f**, then from OLED tile assembly **100f** to OLED tile assembly **100c** via an electrical connection between data output connector **132** of OLED tile assembly **100f** and data input connector **130** of OLED tile assembly **100c.** In each case, the video and control data is re-transmitted by control board **154** of each OLED tile assembly **100**.

The multi-line distribution method of power distribution is accomplished by AC power connections from one OLED tile assembly **100** to the next OLED tile assembly **100** along the same column or row as follows. A POWER INPUT signal **520a** from a mains power supply (not shown) is supplied to OLED tile assembly **100g** via an electrical connection to power input connector **134** of OLED tile assembly **100g.** AC power is then transferred from OLED tile assembly **100g** to OLED tile assembly **100d** via an electrical connection between power output connector **136** of OLED tile assembly **100g** and power input connector **134** of OLED tile assembly **100d**. AC power is then subsequently also transferred from OLED tile assembly **100d** to OLED tile assembly **100a** via an electrical connection between power output connector **136** of OLED tile assembly **100d** and power input connector **134** of OLED tile assembly **100a**. Likewise, a POWER INPUT signal **520b** from the mains power supply (not shown) is supplied to OLED tile assembly **100h** via an electrical connection to power input connector **134** of OLED tile assembly **100h**. AC power is then transferred from OLED tile assembly **100h** to OLED tile assembly **100e** via an electrical connection between power output connector **136** of OLED tile assembly **100h** and power input connector **134** of OLED tile assembly **100e**. AC power is then transferred from OLED tile assembly **100e** to OLED tile assembly **100b** via an electrical connection between power output connector **136** of OLED tile assembly **100e** and power input connector **134** of OLED tile assembly **100b**. Lastly, a POWER INPUT signal **520c** from the mains power supply (not shown) is supplied to OLED tile assembly **100j** via an electrical connection to power input connector **134** of OLED tile assembly **100j**. AC power is then transferred from OLED tile assembly **100j** to OLED tile assembly **100f** via an electrical connection between power output connector **136** of OLED tile assembly **100j** and power input connector **134** of OLED tile assembly **100f**. AC power is then transferred from OLED tile assembly **100f** to OLED tile assembly **100c** via an electrical connection between power output connector **136** of OLED tile assembly **100f** and power input connector **134** of OLED tile assembly **100c.** As mentioned previously, the AC input voltage from a power input connector **134** is simply bussed directly to power output connector **136**. Equally to the distribution of the DATA IN signal **505** over the OLED tile assemblies **100**, the power distribution may be performed either column-wise or row-wise.

An alternative distribution method for signal distribution is a star distribution (not represented in the drawings). The wording star distribution refers to the fact that the distribution of data signals or power occurs from the centre to the edge of the tiled OLED display **500** or vice versa. In this distribution method, the signals are transferred by a data reclocker **510** to several central OLED tile assemblies **100**, each of them further transferring the data signals to tiles at further distance of the centre or the edge respectively of the tiled OLED display **500**. In this way, distribution of video data under the form of a scalable bit stream and of control data is obtained between the OLED tile assemblies from the centre assemblies **100** of the OLED tile display **500** to the edge assemblies **100** or vice versa, so that all OLED tile assemblies **100** obtain their part of the video data and control data. If preferred, it is also possible to obtain video data and control data transfer from edge assemblies to centre assemblies, i.e. starting at some of the edge assemblies and transferring to neighbouring assemblies ending in or around the centre of the display, so that all OLED tile assemblies **100** obtain their part of the video data and control data. In similar way, it is possible to obtain this method of distribution, i.e. star distribution, for the power distribution.

A third distribution method of both video data and control data and power is illustrated in **Fig. 5B**. It shows a daisy-chain method of distribution for a tiled OLED display **500.** The tiled OLED display **500** is representative of a k by l array of OLED tile assemblies **100**. In this example, a 3x3 array is pictured. More specifically, **Fig. 5B** illustrates that tiled OLED display **500** includes, for example, OLED tile assemblies **100a**, **100b**, **100c**, **100d**, **100e**, **100f**, **100g**, **100h**, and **100j**. It is further illustrated that each OLED tile assembly **100** includes its associated data input connector **130**, data output connector **132**, power input connector **134**, and power output connector **136**.

The daisy-chain distribution method of signal distribution is described as follows. A DATA IN signal **505**, representative of video data and control data, from a central processing unit (not shown) is supplied to an input of one OLED tile assembly **100,** i.e. in the example given to data input connector **130** of OLED tile assembly **100g**. Subsequently, the video and control data is transferred from one OLED tile assembly **100** to a next, neighbouring OLED tile assembly **100**. For example and with reference to **Fig. 5B**, the video and control data is transferred from OLED tile assembly **100g** to OLED tile assembly **100d** via an electrical connection between data output connector **132** of OLED tile assembly **100g** and data input connector **130** of OLED tile assembly **100d,** then from OLED tile assembly **100d** to OLED tile assembly **100a** via an electrical connection between data output connector **132** of OLED tile assembly **100d** and data input connector **130** of OLED tile assembly **100a**. The video and control data is then further transferred from OLED tile assembly **100a** to OLED tile assembly **100b**, via an electrical connection between data output connector **132** of OLED tile assembly **100a** and data input connector **130** of OLED tile assembly **100b**. In similar way, the video data and control data are subsequently transferred from OLED tile assembly **100b** to OLED tile assembly **100e,** from OLED tile assembly **100e** to OLED tile assembly **100h**, from OLED tile assembly **100h** to OLED tile assembly **100j**, from OLED tile assembly **100j** to OLED tile assembly **100f** and from OLED tile assembly **100f** to OLED tile assembly **100c**. In similar way, the daisy-chain method of power distribution is accomplished by AC power connections from one OLED tile assembly **100** to the next OLED tile assembly **100**.

Although the latter method does not allow parallel distribution of the video and control data, i.e. distributing of video data and control data occurs subsequently to a neighbouring tile, it can allow parallel, i.e. simultaneous, processing by the different OLED tile assemblies.

In Figures 5A and 5B, the same distribution method is used to distribute the power and the data. There is however no need to use the same method for data and power distribution.

The central system controller is aware of the X and Y configuration of each OLED tile assembly **100**, i.e. its location in the array, in the tiled OLED display **500**. High-level software addresses each OLED tile assembly **100** uniquely. At set-up, each OLED tile assembly **100** is assigned a unique number in the chain and picture co-ordinates are assigned accordingly. Once the configuration of tiled OLED display **500** is established at set-up, each OLED tile assembly **100** stores its information locally and thus the configuration process need not be repeated with each cycle of power. Only when the user reconfigures tiled OLED display **500** is it necessary to reassign OLED tile assemblies **100** to re-establish the picture co-ordinates.

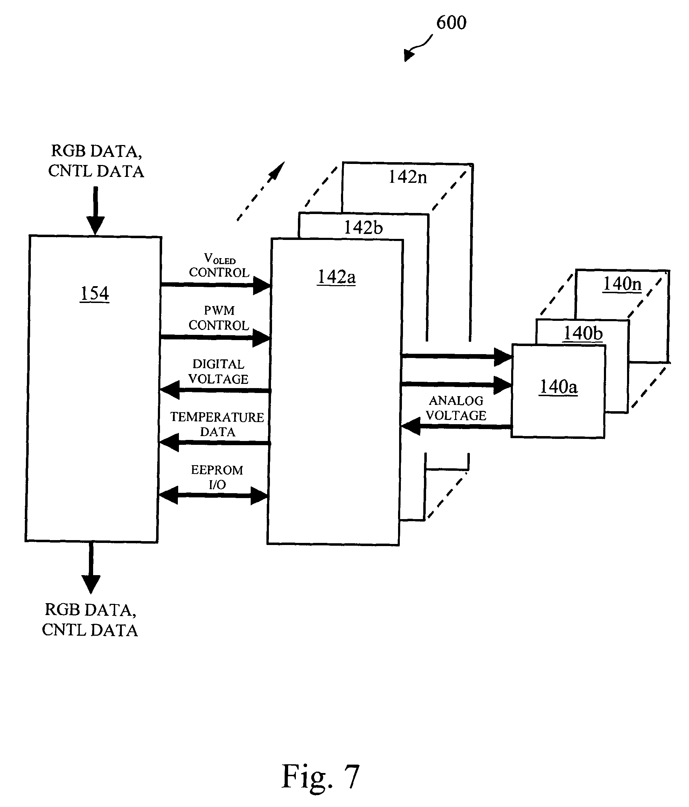

**Fig. 6** illustrates a functional block diagram of an OLED tile control system **600** for use in an OLED tile assembly **100** in accordance with an embodiment of the present invention. OLED tile control system **600** performs the local processing and control functions needed to operate the *n* by *m* array of OLED module assemblies **138. Fig. 6** illustrates the physical distribution of the active functions across the combination of substrates **140**, OLED boards **142**, and control board **154**, along with their electrical interconnections. More specifically, **Fig. 6** illustrates that: a substrate **140a** further includes an OLED array **612;** an OLED board **142a** further includes a plurality of bank switches **613,** a plurality of current sources **614,** an analog-to-digital (A/D) converter **622,** an EEPROM **624,** and a temperature sensor **628;** and control board **154** further includes a tile processing unit **610,** a bank switch controller **616**, a constant current driver (CCD) controller **618**, a pre-processor **620**, and a module interface **626**. Substrate **140a** and OLED board **142a** shown in **Fig. 6** are representative of one of *n* by *m* substrates **140** and one of *n* by *m* OLED boards **142**, as shown in **Fig. 7**.

The physical implementation of the functional blocks of each OLED board **142** and control board **154** may be via a custom application-specific integrated circuit (ASIC) device or a field-programmable gate array (FPGA) device, as is well known.

**Fig. 6** illustrates that tile processing unit **610** is fed by an incoming, e.g. red, green, blue, data signal RGB DATA IN that is an image-wise spatially scalable bitstream, e.g. a serial data signal, containing the current video frame information to be displayed on OLED tile assembly **100**. Tile processing unit **610** subsequently buffers the incoming data signal RGB DATA IN and supplies an output data signal RGB DATA OUT of tile processing unit **610**. Synchronisation of images on the different tiles may be done by means of a synchronisation signal in the bitstream. A difference in synchronisation between the first tile and the last tile where the data signal arrives may occur, but will not be more than a few clock ticks at e.g. 32MHz, and will not be noticed by the human eye.

Additionally, control data CNTL DATA from a general processor (not shown), such as a personal computer (PC) for example, that functions as the system-level controller of the OLED tile assembly **100** is supplied to tile processing unit **610** via a CNTL DATA bus. The CNTL DATA bus is a serial data bus that provides control information to OLED tile assembly **100**, such as colour temperature, gamma, and imaging information. Tile processing unit **610** subsequently buffers the control data from the CNTL DATA bus for supplying an output control data signal to an outgoing CNTL DATA bus of tile processing unit **610**. Tile processing unit **610** re-transmits the data signal RGB DATA IN and the control data on the CNTL DATA bus to the next OLED tile assembly **100** of a tiled OLED display **500**, as shown in **Fig. 5A** and **Fig. 5B**.

Using the imaging information from the control data signal on the CNTL DATA bus, tile processing unit **610** stores the serial data signal RGB DATA IN for that particular frame that corresponds to either OLED tile assembly **100** being used as an autonomous display or by the physical position of a given OLED tile assembly **100** being used within a larger tiled display, such a tiled OLED display **500** of **Fig. 5A** or **Fig. 5B**.

In the case of tiled OLED display **500**, tile processing unit **610** of each OLED tile assembly **100** associated with an OLED array in a tiled display **500** receives the data signal RGB DATA IN and subsequently parses this information into specific packets associated with the location of a given OLED tile assembly **100** within tiled OLED display **500**. Algorithms running on tile processing unit **610** of each OLED tile assembly **100** facilitate the process of identifying the portion of the serial input data signal RGB DATA IN that belongs to its physical portion of tiled OLED display **500**. Subsequently, tile processing unit **610** distributes a serial RGB signal RGB_{(X)} to pre-processor **620**, which RGB signal RGB₍ₓ₎ belongs to a physical portion of the tiled OLED display **500.**

Similarly, tile processing unit **610** receives the control data on the control data bus CNTL DATA and subsequently parses this information into specific control buses associated with the location of a given OLED tile assembly **100** within tiled OLED display **500.** Subsequently, tile processing unit **610** distributes a control signal CONTROL_{(X)} that provides control information, such as colour temperature, gamma, and imaging information, to OLED tile control system **600**.

The elements of OLED tile control system **600** are electrically connected as follows. The RGB signal RGB_{(X)} from tile processing unit **610** feeds pre-processor **620;** a control bus output BANK CONTROL of pre-processor **620** feeds bank switch controller **616;** a control bus output CCD CONTROL of pre-processor **620** feeds CCD controller **618;** a control bus output V_{OLED} CONTROL of bank switch controller **616** feeds bank switches **613** that are connected to the row lines of OLED array **612;** and a pulse width modulation control bus output PWM CONTROL of CCD controller **618** feeds current sources **614** that are connected to the column lines of OLED array **612** via conventional active switch devices, such as MOSFET switches or transistors. A bus output ANALOG VOLTAGE of OLED array **612** feeds A/D converter **622;** a bus output DIGITAL VOLTAGE of A/D converter **622** feeds module interface **626;** and a bus output TEMPERATURE DATA of temperature sensor **628** feeds module interface **626.** The control bus output CONTROL_{(X)} of tile processing unit **610** also feeds module interface **626.** Furthermore, an input/output bus EEPROM I/O exists between EEPROM **624** and module interface **626;** an input/output bus DATA I/O exists between pre-processor **620** and module interface **626;** and, lastly, module interface **626** drives a data bus MODULE DATA_{(X)} to tile processing unit **610.** Critical diagnostic information, such as temperature, ageing factors, and other colour correction data, is available to tile processing unit **610** via the data bus MODULE DATA_{(X)}.

A summary of the elements in the OLED tile control system **600** and their functions is provided below:
OLED array **612** includes a plurality of addressable discrete OLED devices, i.e., pixels. Those skilled in the art will appreciate that the OLED devices for forming a graphics display are typically arranged logically in rows and columns, as explained above, to form an OLED array, as is well known. OLED array **612** may be configured as a common-anode, passive-matrix OLED array. Bank switches **613** may be conventional active switch devices, such as MOSFET switches or transistors. Bank switches **613** connecting positive voltage sources to the rows of OLED array **612** are controlled by the control bus V_{OLED} CONTROL of bank switch controller **616**. Current sources **614** may be conventional current sources capable of supplying a constant current, typically in the range of 5 to 50 mA. Examples of constant current devices include a Toshiba TB62705 (8-bit constant current LED driver with shift register and latch functions) and a Silicon Touch ST2226A (PWM-controlled constant current driver for LED displays). The active switches connecting current sources **614** to the columns of OLED array **612** are controlled by the control bus PWM CONTROL of CCD controller **618**. OLED array **612** also provides feedback of the cathode voltages via the ANALOG VOLTAGE bus. OLED array **612** also provides feedback of the voltage value across each current source **614** via the bus ANALOG VOLTAGE.
   Bank switch controller **616** contains a series of latches that store the active state of each bank switch **613** for a given frame. In this manner, random line addressing is possible, as opposed to conventional line addressing, which is consecutive. Furthermore, pre-processor **620** may update the values stored within bank switch controller **616** more than once per frame in order to make real-time corrections to the positive voltage +V_{OLED} driving a line of OLED pixels based on temperature and voltage information received during the frame. For example, an increase in temperature during a frame output may trigger a voltage reading command where bank switch controller **616** enables the positive voltage +V_{OLED} to the requested OLED devices within OLED array **612**.
CCD controller **618** converts data from pre-processor **620** into PWM signals, i.e., the signals on the control bus PWM CONTROL, to drive current sources **614** that deliver varying amounts of current to the OLED devices or pixels within OLED array **612**. The width of each pulse within the control bus PWM CONTROL dictates the amount of time a current source **614** associated with a given OLED device will be activated and deliver current. Additionally, CCD controller **618** sends information to each current source **614** regarding the amount of current to drive, which is typically in the range of 5 to 50 mA. The amount of current is determined from the brightness value, Y, for a given OLED device, which brightness value is calculated in pre-processor **620**.
Pre-processor **620** develops local colour correction, ageing correction, black level, and gamma models (correction values may be stored in internal look-up tables (not shown) or in EEPROM **624)** for the current video frame using information from module interface **626.** Pre-processor **620** combines the RGB data of the RGB signal RGB_{(X)} describing the current frame of video to display with the newly developed colour correction algorithms and produces digital control signals, i.e., the signals on the buses BANK CONTROL and CCD CONTROL, for bank switch controller **616** and CCD controller **618**, respectively. These signals dictate exactly which OLED devices within OLED array **612** to illuminate and at what intensity and colour temperature in order to produce the desired frame at the required resolution and colour-corrected levels. In general, the intensity, or greyscale value, is controlled by the amount of current used to drive an OLED device. Similarly, the colour temperature of the emitted light is controlled by the greyscale colour value and the relative proximity of each sub-pixel required to produce the desired colour. For example, a bright orange colour is produced by illuminating a green sub-pixel in close proximity to a brightly lit red sub-pixel. Therefore, it is important to have precise control over the brightness and the amount of time an OLED device is lit.
A/D converter **622** uses the analog voltage values, i.e., signals on the bus ANALOG VOLTAGE, from OLED array **612** to feed the voltage information back to module interface **626** via the bus DIGITAL VOLTAGE. The voltages across each OLED device within OLED array **612** (i.e., power supply voltage minus the cathode voltages) are monitored so that correct aging factors and light output values may be calculated in order to further produce the correct amounts of driving current through each OLED device within OLED array **612**. Pre-processor **620** compares a pre-stored threshold voltage level for each OLED device within OLED array **612** with the voltage value measured by A/D converter **622** to determine whether digital voltage correction is plausible. If the voltage across a specific OLED device is below a maximum threshold voltage, digital correction may be implemented through colour correction algorithms. However, if the voltage is greater than the maximum threshold voltage, an adjustment must be made to the overall supply voltage. Digital voltage correction is preferred to supply voltage correction because it allows finer light output control for specific OLED devices within OLED array **612**.
EEPROM **624** may be any type of electronically erasable storage medium for pervasively storing diagnostic and colour correction information. For example, EEPROM **624** may be a Xicor or Atmel model 24C16 or 24C164. EEPROM **624** holds the most recently calculated colour correction values used for a preceding video frame, specifically, gamma correction, ageing factor, colour co-ordinates, and temperature for each OLED module assembly **138**. All factory and calibration settings may be stored in EEPROM **624** as well.

The gamma curves (either full gamma curves or parameters that define the curves in order to conserve storage space) for both light and dark values are stored in EEPROM **624** at start-up from the system-level controller via the control bus CONTROL_{(X)} from tile processing unit **610**. Colour co-ordinates for each OLED device within OLED array **612** are also stored in EEPROM **624** in the form of (x,y,Y), where x and y are the co-ordinates of the primary emitters and Y is defined as the brightness.

The ageing factor of an OLED device is a value based on the total ON time, the temperature during that ON time, and total amount of current through each OLED device within OLED array **612**. Other information may be stored in EEPROM **624** at any time without deviating from the spirit and scope of the present invention. Communication to EEPROM **624** is accomplished via the input/output bus EEPROM I/O. An advantage to locally storing colour correction and additional information specific to an OLED module assembly **138** on EEPROM **624** is that when new OLED module assemblies **138** are added to OLED tile assembly **100**, or when OLED module assemblies **138** are rearranged within OLED tile assembly **100**, valuable colour correction, ageing factors, and other details regarding the operation of OLED module assemblies **138** are also transported. Therefore, the new tile processing unit **610** is able to read the existing colour correction information specific to that OLED module assembly **138** from its local EEPROM **624** at any time and is able to make adjustments to the overall control of OLED tile assembly **100**. This allows thus switching the OLED tiles without losing the necessary correction information.

Module interface **626** serves as an interface between tile processing unit **610** and all other elements within OLED boards **142**. Module interface **626** collects the current temperature data from temperature sensor **628** and the current colour co-ordinate information (tristimulus values in the form of x,y,Y), ageing measurements, and runtime values from EEPROM **624** for each OLED device within OLED array **612**. In addition, module interface **626** collects the digital voltage values during the ON time of each OLED device within OLED array **612** from A/D converter **622**. Module interface **626** also receives control data, i.e., the signal on the control bus CONTROL_{(X)}, from tile processing unit **610,** which dictates to pre-processor **620** how to perform colour correction (from a tile-level point of view) for the current video frame.

Temperature sensor **628** may be a conventional sensing device that takes temperature readings within OLED module assembly **138** to determine the temperature of the OLED devices within OLED module assembly **138**. Accurate temperature readings are critical in order to correctly adjust for colour correction. Based on the temperature of each OLED device within OLED array **612**, the current may be adjusted to compensate for the variation in light output caused by temperature. Temperature information from temperature sensor **628** is sent to module interface **626** for processing via the data bus TEMPERATURE DATA. An example temperature sensor **628** is an Analog Devices AD7416 device.

Embedded in an OLED tile assembly **100**, the OLED tile control system **600** - as well as other parts in the OLED tile assembly **100**, e.g. the power supply of the OLED tile assembly **100** and additional cooling blocks provided as heat sinks e.g. at the back of the OLED array **612** - are cooled by a cooling fluid, e.g. by airflow, as a result of the action of one or more cooling fans. These cooling fans can be conventional DC fans capable of providing a volume rate of airflow of between 2 and 5 cubic feet per minute (cfm) in order to maintain an operating temperature within the OLED tile assembly of between 10 and 50°C. An example of a cooling fan that can be used is a Delta Electronics model BFB0505M. The power supply of the OLED tile assembly **100** provides DC power to the cooling fans.

**Fig. 7** illustrates the overall architecture of OLED tile control system **600** in accordance with the invention. **Fig. 7** illustrates that a single control board **154** is designed to handle *n* by *m* OLED boards **142a** to **142n** and substrates **140a** to **140n**. Control board **154** is therefore customised depending upon the specific *n* by *m* configuration of OLED module assemblies **138** within a given OLED tile assembly **100.** More specifically, a single control board **154** provides the signal fanout associated with the control bus V_{OLED} CONTROL , the control bus PWM CONTROL, the bus DIGITAL VOLTAGE, the data bus TEMPERATURE DATA, and the input/output bus EEPROM I/O to OLED boards **142a** to **142n** via connectors **152a** to **152n**, respectively.

With reference to **Fig.s 1A** through 7, the features and operation of OLED tile assembly **100** are generally described as follows.

Firstly, functionality is built into OLED tile assembly **100** that allows it to operate autonomously as a single display unit or alternatively within a set of OLED tile assemblies **100** forming a larger tiled display, such as tiled OLED display **500**, all under the control of a central control system. To achieve this flexibility, each OLED tile assembly **100** includes, for example:
- A digital video interface (i.e., tile processing unit **610**) to handle all content (i.e., video) and communications information received. Content generation is e.g. via a DVI data stream of 24-bit RGB data (i.e., signal RGB DATA IN). Tile processing unit **610** handles the transfer of content data to each OLED module assembly **138**. The communication link between OLED tile assembly **100** and the central control system is provided via standard RS-485 protocol (i.e., CNTL DATA bus).
- An automatic addressing system, which is software based. Each OLED tile assembly **100** receives the same content data stream, but due to the addressing scheme, each OLED tile assembly **100** decodes which portion of the data to use and displays only that portion thereof based upon a predetermined co-ordinate address that is stored locally via each EEPROM **624**.
- A power supply (i.e., P/S **158**) with a programmable regulated DC output.
- A processor (i.e., tile processing unit **610**) for performing real-time calculations for the various pixels, such as upscaling, downscaling, ON time calculations, light output calculation, lifetime correction, colour correction, pre-charge control, etc.; all to achieve a uniform image at the OLED module assembly **138** level.
- A cooling system (i.e., see **Fig. 2**). More specifically, each OLED tile assembly **100** includes a set of cooling fans **160** and cooling blocks **146**.
- A diagnostic system, within which tile processing unit **610** handles the transfer of data to each OLED module assembly **138.** For example, A/D converter **622** is used to monitor voltage thresholds (i.e., power supply voltage minus the cathode voltages) across each OLED device within OLED array **612**, and temperature sensor **628** is used to measure the temperature within an OLED module assembly **138** or OLED tile assembly **100.**

A first key aspect of OLED tile assembly **100** for use autonomously or alternatively within a set of OLED tile assemblies **100** is that distributed processing performs image upscaling or downscaling as necessary at each OLED tile assembly **100**, rather than having a single central processor performing all of the scaling tasks. For example, instead of one central processor handling a 4Kx4K resolution image and running all of the image scaling algorithms, each tile processing unit **610** (a simple video processor) of each OLED tile assembly **100** handles a small resolution image, such as 100x100 pixels. Furthermore, each tile processing unit **610** of each respective OLED tile assembly **100** is operating in parallel, thereby achieving very time-efficient processing. The parallel processing allows much more time for each OLED tile assembly **100** to calculate the image scaling, typically a 50 or 60 Hz timeframe. Thus, a very high-level scaling algorithm, e.g. bilinear or bicubic interpolation, is implemented very cost-effectively, which provides added value to the overall display system. Furthermore, instead of doing linear interpolation, this distributed processing technique allows the use of a slower 100% accurate scaling algorithm. An example calculation illustrating a comparison between non-distributed processing via a central processor and distributed processing via OLED tile assemblies **100** is as follows:
Real-time ON time calculation using non-distributed processing via a central processor
   Supposing incoming active data: 1600x1200 pixels at 50Hz.
   PixelRate = 50*1600*1200 = **96 MHz** (minimum because of reduced blanking signal).
   For real-time ON time calculations, a [3x3] x [3x1] matrix calculation for every pixel is performed. This [3x3] x [3x1] requires 3 x 3 = 9 multiplications and 3 x 3 = 9 additions, thus totalling 18 mathematical calculations.
   Supposing every calculation requires one clock cycle, a calculation speed of 96MHz x 18 = **1.72 GHz** is needed.
Real-time ON time calculation using distributed processing via OLED tile assemblies **100**
   Supposing each OLED module assembly **138** comprises 96 x 72 pixels.
   A display of 1600x1200 pixels can be split into (1600/96) x (1200/72) = 277 OLED tile assemblies **100**.
   Each OLED tile assembly **100** has to process 96x72 = 6912 pixels in one frame of 50Hz, resulting in a processing speed of 6912 x 50 = 345 kHz.
   Taking into account the multiplication of the matrix, a calculation speed of 345 kHz x 18 = **6.2 MHz** is needed.

A second key aspect of OLED tile assembly **100** for use autonomously or alternatively within a set of OLED tile assemblies **100** is that, because video stream is known, once the image scaling has been calculated, the ON time for each OLED may be calculated for a given OLED module assembly **138**. This ON time is stored locally within EEPROM **624**. This ON time in combination with the temperature measurement of OLED module assembly **138** and the voltage measurement of the OLED itself may be used to derive the lifetime of each OLED within a given OLED module assembly 138.

In summary, within OLED tile assembly **100**, the information to potentially provide a 100% lifetime guarantee for OLED tile assembly **100** is available locally. The physical hardware implementation of OLED tile assembly **100** and the architecture of tiled OLED display **500** formed by a *k* by *l* array of OLED tile assemblies **100** provides distributed processing that has the result of a less complex display hardware and software system, thereby avoiding the need for high-bandwidth calculations by a central processor.

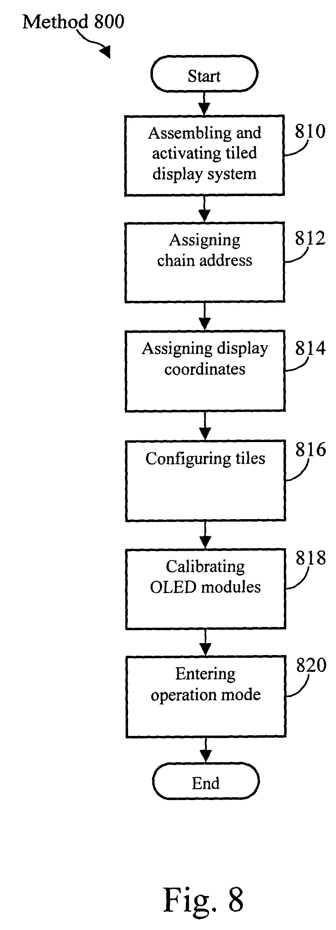

**Fig. 8** is a flow diagram of a method **800** of initial assembly, automatic configuration, and calibration of tiled OLED display **500** in accordance with an embodiment of the present invention. **Fig.s 1A** through **7** are referenced throughout the steps of method **800.** Method **800** includes the following steps:

### Step 810: Assembling and activating tiled display system

In this step, a plurality of OLED tile assemblies **100** are mechanically assembled in a *k* by *l* array, thereby forming a tiled OLED display such as tiled OLED display **500.** Examples of data signal and power distribution methods are shown in **Fig. 5A** and **Fig. 5B**. Power is subsequently applied to each OLED tile assembly **100** of tiled OLED display **500.** Method **800** proceeds to step **812**.

### Step 812: Assigning chain address

In this step, a central processor detects the presence of OLED tile assemblies **100** by systematically opening and closing switches to detect the presence and location of each OLED tile assembly **100** within tiled OLED display **500**. The identification information of the OLED tile assembly **100** is read by an identification information determining means, such as e.g. an RS232 data interface. The switches used represent e.g. digital 'AND' functions. These are located in the data reclockers. The central processor subsequently assigns each OLED tile assembly **100** a unique address for use in steering content and communications data (control signals) to each. Control signals may be used from the central processor to each of the individual tiles. Method **800** proceeds to step **814.**

### Step 814: Assigning display co-ordinates

In this step, each OLED tile assembly **100** receives the display co-ordinates that designate what portion of the overall display it will show. Tile processing unit **610** of each OLED tile assembly **100** uses its display co-ordinates to automatically scale the incoming data to the resolution of OLED tile assembly **100**. Method **800** proceeds to step **816**.

### Step 816: Configuring tiles

In this step, the configuration data contained in EEPROM **624** within each OLED module assembly **138** is read by its associated tile processing unit **610**. Each tile processing unit **610** uses this information to configure the resolution of its associated OLED tile assembly **100** according to the characteristics of its associated OLED module assemblies **138**. Method **800** proceeds to step **818.**

### Step 818: Calibrating OLED modules

In this step, each OLED module assembly **138** within each OLED tile assembly **100** is calibrated by setting the brightness value Y of each sub-pixel to the appropriate value, i.e. the value that allows realising the desired colour temperature and brightness. Calibration factors are set within each OLED tile assembly **100** so that every pixel within each OLED tile assembly **100** matches the overall display brightness and is colour-compensated to correct individual pixel non-uniformity. Method **800** proceeds to step **820.**

### Step 820: Entering operation mode

In this step, each tile processing unit **610** of each OLED tile assembly **100** within tiled OLED display **500** now receives global display parameters for normal operation from the central processor, thereby entering operation mode. Method **800** ends.

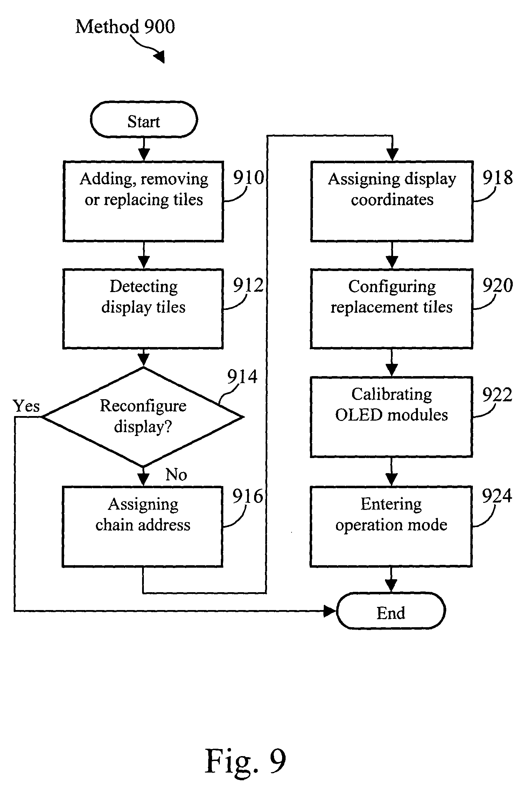

**Fig. 9** is a flow diagram of a method **900** of replacing, adding, or removing one or more OLED tile assemblies **100** in tiled OLED display **500**. **Fig.s 1A** through **7** are referenced throughout the steps of method **900.** Method **900** includes the following steps:

### Step 910: Adding, removing, or replacing tiles

In this step, one or more OLED tile assemblies **100** of an existing tiled OLED display **500** are mechanically replaced, added, or removed. Additionally, existing OLED tile assemblies **100** within an existing tiled OLED display **500** may be reconfigured to form a tiled OLED display **500** of different dimensions than the original. Method **900** proceeds to step **912.**

### Step 912: Detecting display tiles

In this step, a central processor detects the presence of OLED tile assemblies **100** by systematically opening and closing switches to detect the presence and location of each OLED tile assembly **100** with tiled OLED display **500.** Method **900** proceeds to step **914**.

### Step 914: Reconfigure display?

In this decision step, using the information about OLED tile assemblies **100** detected in step **912**, the central processor determines whether the number and arrangement of tiles has been altered. If yes, method **900** ends and method **800** is performed; if no, tiles have only been replaced and method **900** proceeds to step **916**.

### Step 916: Assigning chain address

In this step, the central processor detects the presence and location of each replacement or repositioned OLED tile assembly **100** and assigns a unique chain address for use in steering content and communications data to each. Method **900** proceeds to step **918**.

### Step 918: Assigning display co-ordinates

In this step, each replacement OLED tile assembly **100** receives the display co-ordinates that designate what portion of the overall display it will show. Tile processing unit **610** of each OLED tile assembly **100** uses its display co-ordinates to automatically scale the incoming data to the resolution of OLED tile assembly **100**. Method **900** proceeds to step **920**.

### Step 920: Configuring replacement tiles

In this step, the configuration data contained in EEPROM **624** in each tile processing unit **610** contained in each replacement OLED tile assembly **100** is read by tile processing unit **610**. Each tile processing unit **610** uses this information to configure the resolution of its associated OLED tile assembly **100** according to the characteristics of its associated OLED module assemblies **138**. Method **900** proceeds to step **922.**

### Step 922: Calibrating OLED modules

In this step, each tile processing unit **610** within each replacement OLED tile assembly **100** is calibrated by setting the brightness value Y of each sub-pixel to the appropriate value, i.e. the value that allows realising the desired colour temperature, the desired brightness level and uniformity and the desired colour uniformity. Calibration factors are set within each OLED tile assembly **100** so that every pixel within each OLED tile assembly **100** matches the overall display brightness and is colour-compensated to correct individual pixel non-uniformity. Method **900** proceeds to step **924.**

### Step 924: Entering operation mode

In this step, each tile processing unit **610** of each OLED tile assembly **100** within tiled OLED display **500** now receives global display parameters for normal operation from the central processor, thereby entering operation mode. Method **900** ends.

## Claims

1. A tiled emissive display (500) for displaying an image, the tiled emissive display (500) comprising a plurality of emissive display tile assemblies (100) mechanically coupled together, and a processing means for performing real-time calculations with respect to the image to be displayed,
wherein the processing means is a distributed processing means distributed over the plurality of emissive display tile assemblies (100), so that each emissive display tile assembly (100) is suitable for handling a different portion of the image for performing real-time calculations.

2. A tiled emissive display (500) according to claim 1, wherein data with regard to the image to be displayed is sent to the plurality of emissive display tile assemblies (100) under the form of a scalable bit stream.

3. A tiled emissive display (500) according to any of the previous claims, wherein an emissive display tile assembly (100) is provided with means for selecting a portion of the scalable bit stream for displaying on that display tile assembly (100).

4. A tiled emissive display (500) according to claim 3, wherein the means for selecting comprise a truncation means for truncating the bit stream.

5. A tiled emissive display (500) according to any of the previous claims, wherein the distributed processing means is suitable for performing image upscaling or downscaling at each emissive display tile assembly (100).

6. A tiled emissive display (500) according to claim 5, wherein for the image upscaling or downscaling a high-level scaling algorithm is used.

7. A tiled emissive display (500) according to claim 6, wherein the high-level scaling algorithm is a 100% accurate scaling algorithm.

8. A tiled emissive display (500) according to any of the previous claims, wherein the distributed processing means of the plurality of emissive display tile assemblies (100) operate in parallel.

9. A tiled emissive display (500) according to any of the previous claims, wherein an emissive display tile assembly (100) is provided with a data input and/or a data output connection for receiving data from or transmitting data to another emissive display tile assembly (100) via any of a multi-line connection, a daisy chain connection or a star connection.

10. A tiled emissive display (500) according to any of the previous claims, wherein an emissive display tile assembly (100) is provided with a power input and/or a power output connection for receiving power from or transmitting power to another emissive display tile assembly (100) via any of a multi-line connection, a daisy chain connection or a star connection.

11. A tiled emissive display (500) according to any of the previous claims, wherein an emissive display tile assembly (100) is provided with a connector allowing to combine both power and data transmission.

12. A tiled emissive display (500) according to any of the previous claims, wherein each emissive display tile assembly (100) is provided with a local memory means for storing configuration data.

13. A tiled emissive display (500) according to any of the previous claims, wherein an emissive display tile assembly (100) is adapted so that it can be repaired while the other tiles continue working.

14. A tiled emissive display (500) according to any of the previous claims, wherein the tiled emissive display (500) has an adjustable size.

15. A method (800) of automatically configuring a tiled emissive display (500) comprising a plurality of emissive display tile assemblies (100) mechanically coupled together, the tiled emissive display (500) being intended for displaying an image, the method comprising
assigning (812) to each emissive display tile assembly (100) a unique address for use in steering content and communication data,
distributing (814) to each emissive display tile assembly (100) display co-ordinates that designate which portion of the image to be displayed it will show,
configuring (816) the emissive display tile assemblies (100) by reading, for each emissive display tile assembly (100), configuration data stored in a memory device (624) local to the emissive display tile assembly (100), and using this information in a distributed processing means (610) local to the emissive display tile assembly (100) to configure the resolution ofthe emissive display tile assembly (100).

16. A method according to claim 15, furthermore comprising, before assigning (812) to each emissive display tile assembly (100) a unique address, detecting the presence of the emissive display tile assemblies (100) in the tiled emissive display (500).

17. A method according to any of claims 15 or 16, furthermore comprising calibrating the emissive display tile assemblies (100) to match overall display brightness and/or to correct individual pixel non-uniformity.

18. A method according to any of claims 15 to 17, furthermore comprising, before assigning (812) to each emissive display tile assembly (100) a unique address, mechanically assembling and activating the tiled emissive display (500).

19. A method according to claim 18, wherein the mechanical assembling includes providing one of each of a daisy chain connection, a multi-line connection or a star connection for data and/or power from one emissive display tile assembly (100) to another.

20. A method of replacing at least one emissive display tile assembly (100) in a tiled emissive display (500) intended for displaying an image, the method comprising:
mechanically replacing (910) at least one emissive display tile assembly (100) in the tiled emissive display (500),
assigning (916) to the at least one replaced emissive display tile assembly (100) a unique address for use in steering content and communication data,
assigning (918) to the at least one replaced emissive display tile assembly (100) display co-ordinates that designate which portion of the image to be displayed it will show,
configuring (920) the at least one replaced emissive display tile assembly (100) by reading, for each replaced emissive display tile assembly (100), configuration data stored in a memory device (624) local to the at least one emissive display tile assembly (100), and using this information in a distributed processing means (610) local to the replaced emissive display tile assembly (100) to configure the resolution of the emissive display tile assembly (100).

21. A method according to claim 20, furthermore comprising calibrating the at least one replaced emissive display tile assembly (100) to match overall display brightness and/or to correct individual pixel non-uniformity.

22. A method according to any of claims 20 or 21, furthermore comprising, before assigning the unique address, determining (914) whether the number or arrangement of tiles has been altered.

23. A method according to claim 22, furthermore comprising, if the number or arrangement of the tiles has been altered, configuring the tiled emissive display (500) according to any of the methods according to claims 12 to 16.

24. A method according to any of claims 20 to 23, wherein mechanically replacing at least one emissive display tile assembly (100) includes restoring a distribution connection for data and/or power from or to at least one other emissive display tile assembly (100).

25. A tiled emissive display according to any of the claims 1 to 14, wherein the display is an OLED display.

26. A method according to any of the claims 15 to 24, wherein the emissive display is an OLED display.
